# EUROPEAN PATENT APPLICATION

(11) **EP 1 381 201 A2**
(43) Date of publication of application: **14.01.2004**
(21) Application number: 03015192.2
(22) Date of filing: 04.07.2003
(51) Int. Cl.: H04L 29/06

(54) **System, method and program for remote access to a resource using certificates**

(30) Priority: 10.07.2002 JP 2002201472
(71) Applicant: SONY CORPORATION, Tokyo (JP)
(72) Inventor: Matsuyama, Shinako, Shinagawa-ku, Tokyo (JP)
(74) Representative: Rupp, Christian, Dipl.Phys.

(57) **Abstract**

A remote access system includes, as entities, target units to be accessed (10₁,10₂), a home gateway (20) serving as an entrance of a home network to which the target units (10₁,10₂) belong, and a portable unit (30) carried by the user to access the target units (10₁,10₂). In the remote access system, when the portable unit (30) sends and presents an attribute certificate (ACₚ) in which at least privilege with regard to a resource and information of the home gateway (20) are described, to the target units (10₁,10₂) through the home gateway (20), an access made by the portable unit (30) to the resource is checked.

## Description

### BACKGROUND OF THE INVENTION

### 1. Field of the Invention

The present invention relates to remote access systems, remote access methods, and remote access programs, for accessing a predetermined resource from a remote place.

### 2. Description of the Related Art

Recently, various types of units which can be connected to networks have been developed, such as information household electric appliances, and accordingly, networks which connect various units have been configured, such as home networks. In response to such a situation, various service has been proposed in which the users can use units such as their portable telephones or personal digital assistants (PDAs) to perform remote access from remote places such as outdoor locations to units installed indoors, such as various information household electric appliances, various information processing terminals which include personal computers, or servers.

In such service, it is required to perform authentication and access-right management in order to prevent unauthorized users from accessing various resources, such as hardware providing the service, including servers, software, and data.

Such service has already been implemented in some cases, and authentication mechanisms have been separately structured. In such service, however, an authentication method which covers individual privilege (operation) has not yet been established.

As a method for managing individual privilege, an authentication method which uses so-called identification (ID) passwords has been employed, but it needs to have a very complicated mechanism and to have a large processing load.

### SUMMARY OF THE INVENTION

The present invention has been made in consideration of such situations. Accordingly, it is an object of the present invention to provide a remote access system, a remote access method, and a remote access program which use so-called attribute certificates (ACs) to manage privilege to allow control of each privilege to be easily and safely performed not only for entities such as units which access resources but also for resources to be accessed, in each remote access.

The foregoing object is achieved in one aspect of the present invention through the provision of a remote access system for accessing a predetermined resource from a remote place, including an access target unit to be accessed; an accessing unit for accessing the access target unit; and a connection unit for standing proxy for the access target unit to the accessing unit, wherein the accessing unit includes storage means for storing a certificate in which access privilege with regard to the resource is described, and presenting means for presenting the certificate stored in the storage means to the access target unit having the resource; the connection unit includes verification means for verifying the certificate received from the accessing unit, and transmission means for transmitting the certificate verified by the verification means to the access target unit specified by the accessing unit; and the access target unit includes determination means for determining according to the certificate transmitted by the connection unit whether to permit the accessing unit to make an access to the resource.

In the remote access system, the certificate in which access privilege with regard to the resource is described is presented to the access target unit having the resource, the connection unit verifies the certificate, and the access target unit determines whether to permit the accessing unit to make an access to the resource. Therefore, control can be easily applied to each privilege for each resource, and the transmission route of the certificate can be checked, which enhances security.

The foregoing object is achieved in another aspect of the present invention through the provision of a remote access method for accessing a predetermined resource from a remote place, including a storage step of storing a certificate in which access privilege with regard to the resource is described; a presenting step of presenting the certificate stored in the storage step to an access target unit having the resource; a verification step of verifying the certificate received from an accessing unit for accessing the access target unit; a transmission step of transmitting the certificate verified in the verification step to the access target unit specified by the accessing unit; and a determination step of determining whether to permit the accessing unit to make an access to the resource, according to the certificate transmitted by a connection unit for standing proxy for the access target unit to the accessing unit.

In the remote access method, the certificate in which access privilege with regard to the resource is described is presented to the access target unit having the resource, the certificate is verified, and it is determined whether the accessing unit is permitted to make an access to the resource. Therefore, control can be easily applied to each privilege for each resource, and the transmission route of the certificate can be checked, which enhances security.

The foregoing object is achieved in yet another aspect of the present invention through the provision of a remote access program executable by a computer, for accessing a predetermined resource from a remote place, the program including a storage step of storing a certificate in which access privilege with regard to the resource is described; a presenting step of presenting the certificate stored in the storage step to an access target unit having the resource; a verification step of verifying the certificate received from an accessing unit for accessing the access target unit; a transmission step of transmitting the certificate verified in the verification step to the access target unit specified by the accessing unit; and a determination step of determining whether to permit the accessing unit to make an access to the resource, according to the certificate transmitted by a connection unit for standing proxy for the access target unit to the accessing unit.

In the remote access program, the certificate in which access privilege with regard to the resource is described is presented to the access target unit having the resource, the certificate is verified, and it is determined whether the accessing unit is permitted to make an access to the resource. Therefore, control can be easily applied to each privilege for each resource, and the transmission route of the certificate can be checked, which enhances security.

### BRIEF DESCRIPTION OF THE DRAWINGS

Fig. 1 is a view showing the format of a public-key certificate.
Fig. 2 is a view showing the format of the public-key certificate for items not shown in Fig. 1.
Fig. 3 is a view showing the format of an attribute certificate.
Fig. 4 is a view showing the format of the attribute certificate for items not shown in Fig. 3.
Fig. 5 is a view showing a privilege proxy function.
Fig. 6 is a conceptual view of a remote access system according to an embodiment of the present invention.
Fig. 7 is a view showing an excerpt from an attribute field among items shown in the attribute certificate of Fig. 4.
Fig. 8 is a view showing a privilege management method using the concept of roles.
Fig. 9 is a view showing an excerpt from an extended information field among items shown in the attribute certificate of Fig. 4.
Fig. 10 is a view showing a specific content of proxy information in the extended information field in the attribute certificate shown in Fig. 4.
Fig. 11 is a flowchart of phases executed in the remote access system.
Fig. 12 is a flowchart of a series of processes in a registration phase in the remote access system.
Fig. 13 is a flowchart of a series of processes in an access phase in the remote access system.
Fig. 14 is a flowchart of a series of processes in an access deletion phase in the remote access system.
Fig. 15 is a flowchart of a series of processes in an access change phase in the remote access system.
Fig. 16 is a conceptual view of a remote access system according to another embodiment of the present invention.
Fig. 17 is a flowchart of a series of processes in a registration phase in the remote access system.
Fig. 18 is a flowchart of a series of processes in an access phase in the remote access system.
Fig. 19 is a flowchart of a series of processes in an access deletion phase in the remote access system, executed when a portable unit is excluded from units which access a target unit belonging to another network.
Fig. 20 is a flowchart of a series of processes in an access change phase in the remote access system, executed when privilege of a portable unit with regard to a resource in another network is changed.

### DESCRIPTION OF THE PREFERRED EMBODIMENTS

Specific embodiments of the present invention will be described below in detail by referring to the drawings.

A remote access system in which an access is made to a predetermined resource from a remote location, according to an embodiment of the present invention will be described. In this remote access system, attribute certificates (ACs) based on International Organization for Standardization (ISO)/International Electrotechnical Commission (IEC) 9594-8, or based on ITU-T X.509 are used to manage privileges to allow control of each privilege to be easily performed not only for entities such as units which access resources but also for resources to be accessed, in each remote access. In addition, in this remote access system, when an attribute certificate is used, the attribute certificate is transferred between a unit which tries to access a resource and the resource, through a gateway which serves as a gate of the network to which the resource belongs to, to allow the transmission route of the attribute certificate to be checked, which enhances security.

Prior to a description of the remote access system, public key certificates (PKCs) and the above-described attribute certificates both of which are electronic certificates used in the remote access system will be outlined.

Public key certificates will be first described. Public key certificates are issued by certification authorities (CAs) or issuer authorities (IAs), which are independent third parties for public-key encryption methods.

The public-key encryption methods will be described. In these methods, a transmitter and a receiver use difference keys, one key is a public key which can be used by unspecific users, and the other key is a private key, which needs to be maintained confidential. The public-key encryption methods are more advantageous in key management than common-key encryption methods, in which a common key is used for encryption and decryption, because a one specific person is required to have a private key, which needs to be maintained confidential, in the public-key encryption methods. A Rivest-Shamir-Adleman (RSA) encryption method is a typical public-key encryption method. The RSA encryption method uses the difficulty of factorization processing into prime factors for the product of two very large prime numbers having, for example, about 150 figures.

The public-key encryption methods allow unspecific many users to use a public key, and a public-key certificate is widely used to certify that the distributed public key is authorized. In the public-key encryption methods, for example, a specific user A generates a pair of a public key and a private key, sends the generated public key to a certification authority to obtain a public-key certificate, and makes the public-key certificate open to the public. An unspecific user follows a predetermined procedure according to the public-key certificate to obtain the public key, encrypts a document and others which are plaintext, and sends the encrypted document to the specific user A. The user A uses the private key to decrypt the encrypted document sent from the unspecific user. The public-key encryption methods are used in this way.

Further, in the public-key encryption methods, it is possible that the user A uses the private key to add the signature to a document and others which are plaintext, and an unspecific user follows the procedure according to the public-key certificate to obtain the public key and verifies the signature. In the public-key encryption methods, for example, when a certification authority refers to the public-key certificate to determine the public key, and sends any document and others which are plaintext to the user A to ask to encrypt the document by using the private key and send it back, the certification authority can use the public key to decrypt the encrypted document sent from the user A to verify the signature.

A public-key certificate used in the public-key encryption method is produced in the following way. A user serving as an administrator presents information identifying the user, a public key, and others to a certification authority, the certification authority adds information identifying the certification authority and information such as an effective period, and further the certification authority adds the signature of the certification authority.

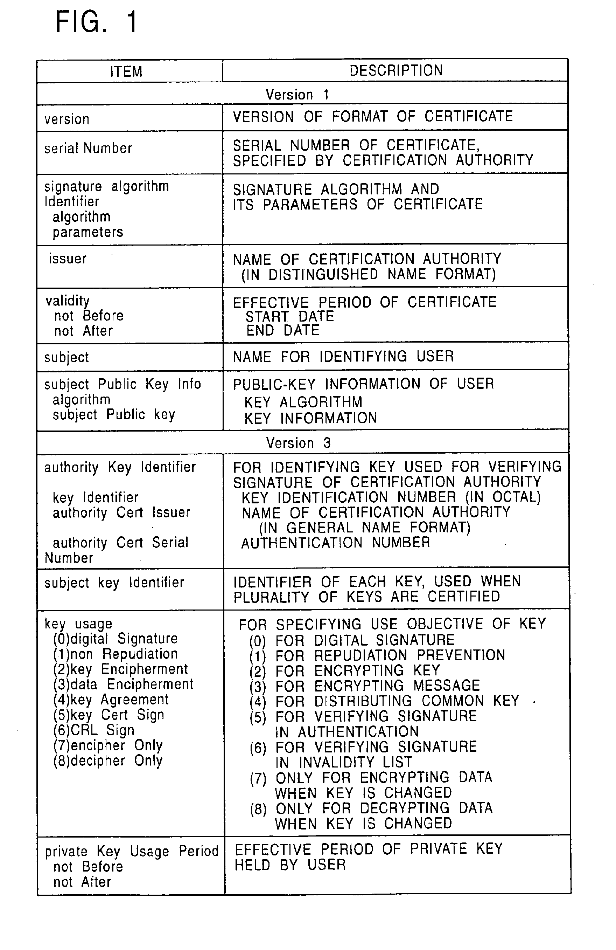

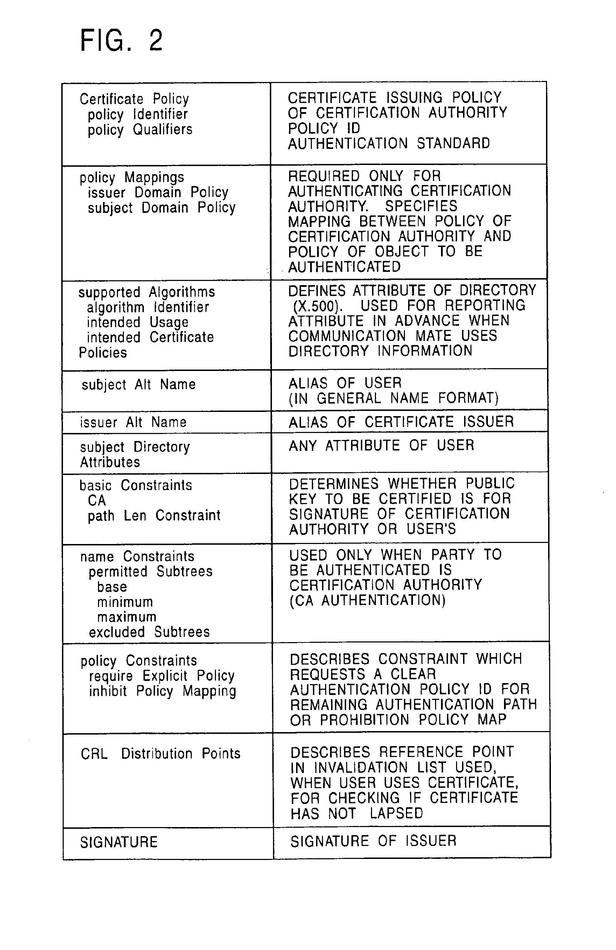

More specifically, a public-key certificate has the format shown in Fig. 1 and Fig. 2. In the figures, items in each field constituting a public-key certificate and their descriptions are given.

A version (version) field shown in Fig. 1 describes the version information of the format of the public-key certificate. When the format is version three, for example, "2" which indicates version three is written.

A serial number (serial Number) field describes the serial number of the public-key certificate, set by the certification authority. A sequential number, for example, is written.

A signature algorithm identifier and algorithm parameters (signature algorithm Identifier algorithm parameters) field describes information identifying the signature algorithm of the public-key certificate and its parameters. The signature algorithm includes, for example, an elliptic curve cryptosystem and an RAS cryptosystem. When the elliptic curve cryptosystem is employed as the signature algorithm, parameters and a key length are written as algorithm parameters. When the RSA cryptosystem is employed as the signature algorithm, a key length is written as an algorithm parameter.

An issuer (issuer) field describes the name of the issuer of the public-key certificate, that is, the name of the certification authority in an identifiable format (distinguished name format).

An effective period (validity) field describes the start date (not Before) and the end date (not After) of the period during which the public-key certificate is effective.

A subject (subject) field describes the name of a person to be authenticated, who is the user. The identifier of a user unit or the identifier of a service providing entity, for example, is written there.

A subject public-key information (subject Public Key Info algorithm subject Public key) field describes key algorithm and key information itself as user public-key information. The key algorithm includes, for example, the elliptic curve cryptosystem and the RSA cryptosystem.

The above-described fields are included in public-key certificates having the version-one format or later. The following fields are included in public-key certificates having the version-three format.

A certification-authority key identifier (authority Key Identifier-key Identifier, authority Cert Issuer, authority Cert Serial Number) field describes information used for identifying the key which is used for verifying the signature of the certification authority. A key identification number in octal, the name of the certification authority in a general-name format, and an authentication number are written.

A subject key identifier (subject key Identifier) field describes, when a plurality of keys are certified in a public-key certificate, the identifier used for identifying each key.

A key usage (key usage) field specifies the objective of use of the key. Any of the following objectives applied are specified. (0) for digital signature (digital Signature), (1) for preventing repudiation (non Repudiation), (2) for encrypting a key (key Encipherment), (3) for encrypting a message (data Encipherment), (4) for distributing a common key (key Agreement), (5) for verifying a signature in authentication (key Cert Sign), (6) for verifying a signature in an invalidation list (CRL Sign), (7) only for encrypting data when the key is changed (encipher Only), and (8) only for decrypting data when the key is changed (decipher Only).

A private key usage period (private Key Usage Period) field describes the start date (not Before) and the end date (not After) of the period during which the private key of the user is effective. As a default, the effective period of the public-key certificate, the effective period of the public key, and the effective period of the private key are set all equal.

A certification-authority policy (Certificate Policy) field shown in Fig. 2 describes the certificate issue policy of the certification authority. A policy ID (policy Identifier) conforming to ISO/IEC 9834-1 or a authentication standard (policy Qualifiers), for example, is written.

A policy mapping (policy Mappings) field is used only when the certification authority is authenticated, and specifies the mapping between the policy (issuer Domain Policy) of the certification authority which issues certificates and the policy (subject Domain Policy) of an object to be authenticated.

A supported algorithm (supported Algorithms) field defines the attribute of a directory (X.500), and is used to report the attribute in advance when a communication destination uses directory information.

A subject alias (subject Alt Name) field describes another name of the user in a general name format.

An issuer alias (issuer Alt Name) field describes another name of the certificate issuer.

A subject directory attribute (subject Directory Attributes) field describes any attributes of the user.

A basic constraint (basic Constraints) field determines whether the public key to be certified is used for the signature of the certification authority or is owned by the user.

A permitted subtree constraint name (name Constraints permitted Subtrees) field is used only when the certification authority is to be authenticated, and indicates the effective area of a public-key certificate.

A constraint policy (policy Constraints) field describes constraint which requests a clear authentication policy ID for the remaining authentication path or a prohibition policy map.

A CRL reference point (Certificate Revocation List Distribution Points) field describes a reference point in an invalidation list used, when the user uses a public-key certificate, for checking if the public-key certificate has not lapsed.

A signature field describes the signature of the issuer of the public-key certificate, that is, the certification authority. An electronic signature is data generated by applying an hash function to the whole of a public-key certificate to generate a hash value and by encrypting the hash value with the use of the private key of the certification authority.

The certification authority issues public-key certificates having such a format, and performs revocation, specifically, updates public-key certificates which have lapsed and generates, manages, and distributes a dishonest-person list to expel the users who have committed frauds. In addition, the certification authority also generate public keys and private keys, if necessary.

The user who uses a public-key certificate verifies the electronic signature in the public-key certificate by using the public key of the certification authority, which the user owns. When the electronic signature is successfully verified, the user obtains the public key according to the public-key certificate. The user can use the public key. Therefore, all users who use public-key certificates need to have or obtain the public keys of the certification authorities which issued the public-key certificates.

In the remote access system, each entity holds such a public-key certificate, as described later.

Attribute certificates will be described next. Attribute certificates are issued by attribute authorities (AAs) which are local organizations different from certificate authorities.

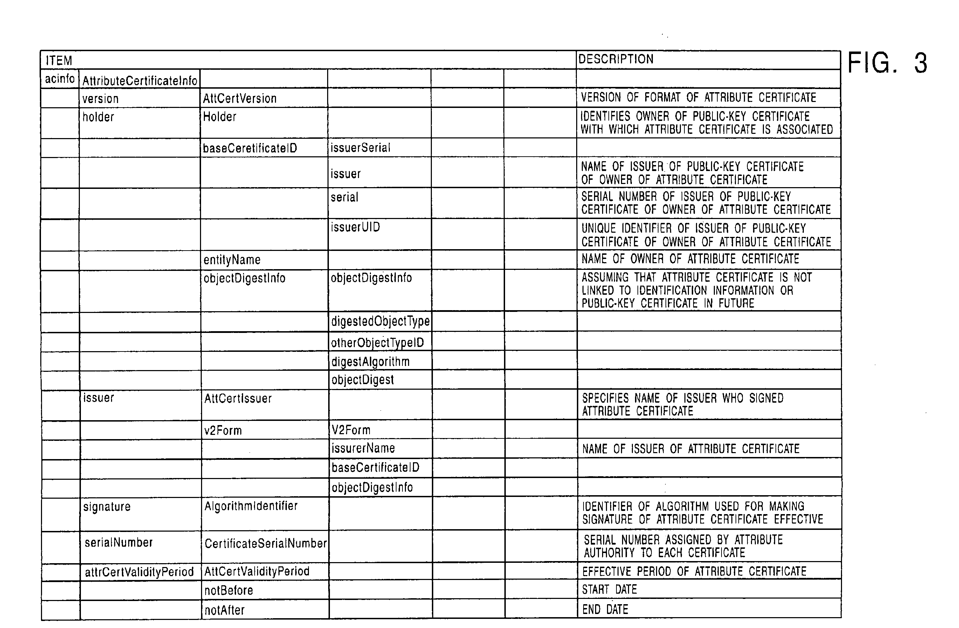

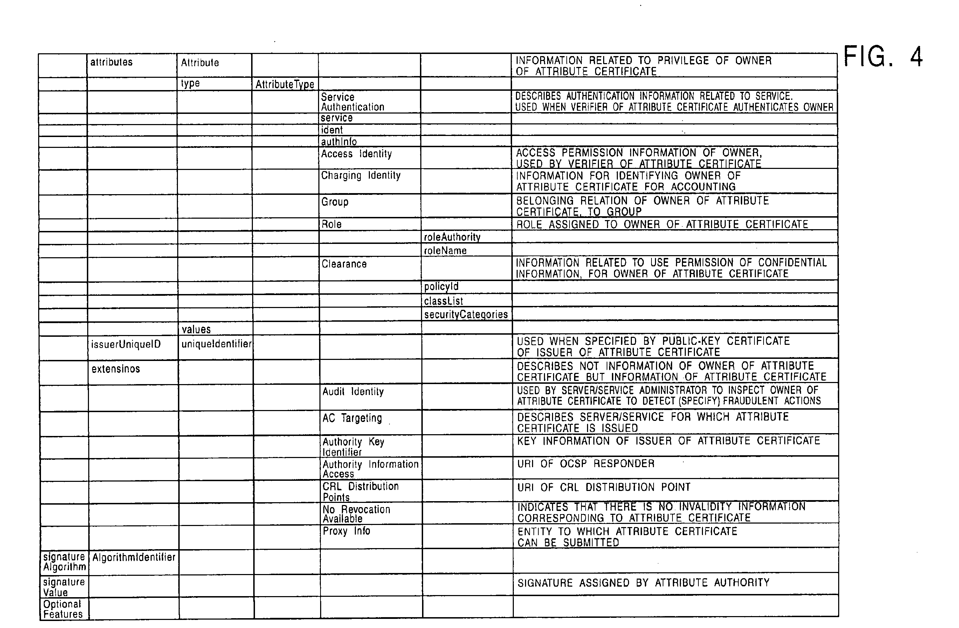

Attribute certificates have the format shown in Fig. 3 and Fig. 4. In the figures, items in each field constituting an attribute certificate and their descriptions are given.

A version (version) field shown in Fig. 3 describes the version information of the format of the attribute certificate. When the format is version two (one), for example, "1" which indicates version two (one) is written.

A holder (holder) field specifies the owner of the public-key certificate with which the attribute certificate is associated. In the holder field, as base-authority identifiers (base Certificate ID), the name (issuer) of the issuer of the public-key certificate owned by the owner of the attribute certificate, the serial number (serial) of the public-key certificate owned by the owner of the attribute certificate, and the unique identifier (issuer UID) for identifying the issuer of the public-key certificate owned by the owner of the attribute certificate are written. In addition, in the holder field, the name (entity name) the owner of the attribute certificate, which is the same as the subject (subject) or the subject alias (subject Alt Name) in the public-key certificate is written. Further, in the holder field, assuming that the attribute certificate is not linked to identification information (identity) or the public-key certificate in the future, object digest information (object Digest Info) in which, for example, the hash function of the public key is written, is specified.

An issuer (issuer) field specifies the information of the issuer who has signed the attribute certificate.

A signature (signature) field describes the identifier used for identifying the algorithm used to make the signature of the attribute certificate effective.

A serial number (serial Number) field describes the serial number assigned by the attribute authority to each attribute certificate.

An attribute-certificate effective period (attr Cert Validity Period) field describes the start date (not Before) and the end date (not After) of the period during which the attribute certificate is effective.

An attribute (attributes) field describes information related to the privileges of the owner of the attribute certificate. For example, an object for which an access is allowed may be written by words, a code which is prepared by the system and can be accessed may be written, or a key used for encrypting plaintext may be written. In the attribute field, for example, authentication information (Service Authentication Information) related to service, used when the verifier of an attribute certificate authenticates the owner of the attribute certificate, access permission information (Access Identity) of the owner of the attribute certificate, used by the verifier of the attribute certificate, information (Charging Identity) used for specifying the owner of the attribute certificate, for accounting, information (Group) indicating a belonging relation of the owner of the attribute certificate, to a group, information (Role) indicating the role assigned to the owner of the attribute certificate, and information (Clearance) related to the use permission of private information, given to the owner of the attribute certificate are written.

A issuer unique identifier (issuer Unique ID) field is used when it is specified in a public-key certificate of the issuer of the attribute certificate.

An extended information (extensions) field does not describe information of the owner of the attribute certificate but describes information of the attribute certificate. Information (Audit Identity) used when the server and/or the service administrator inspects the owner of the attribute certificate to detect, that is, specify fraudulent actions, information (AC Targeting) indicating the server and/or the service for which the attribute certificate was issued, key information (Authority Key) of the issuer of the attribute certificate, serving as auxiliary information used by the verifier of the attribute certificate to verify the signature of the attribute certificate, information (Authority Information Access) indicating the URI (Uniform Resource Identifiers) of an OCSP responder, serving as auxiliary information used by the verifier of the attribute certificate to verify the invalidation state of the attribute certificate, information (CRL Distribution) indicating the URI of the distribution point of a CRL (Certificate Revocation List), serving as auxiliary information used by the verifier of the attribute certificate to verify the invalidation state of the attribute certificate, information (No Revocation) indicating that there is no invalidation information corresponding to the attribute certificate, and information (Proxy Info) used when a presenter of the attribute certificate is other than the owner of the attribute certificate, and indicating an entity to which the attribute certificate can be presented are written.

A signature (signature Value) field describes the signature assigned by the attribute authority.

In the remote access system, each entity holds an attribute certificate having such a format, as described later. Therefore, what privilege has been assigned to an entity can be verified.

The remote access system is structured by using the public-key certificate and the attribute certificate described above.

The remote access system which uses these public-key certificate and attribute certificate will be described below.

The concept of the remote access system will be first described. For convenience of descriptions, it is assumed that an access is made to various information household electric appliances, various information processing terminals, or servers all of which are installed in houses, and the user having a portable units such as a portable telephone or a personal digital assistant (PDA) accesses the above indoor units from the outdoors.

The remote access system controls each resource to be accessed, for each privilege by a privilege proxy function using attribute certificates, which is one of the functions of a privilege management infrastructure (PMI) defined in International Telecommunication Union-Telecommunication sector (ITU-T) X.509.

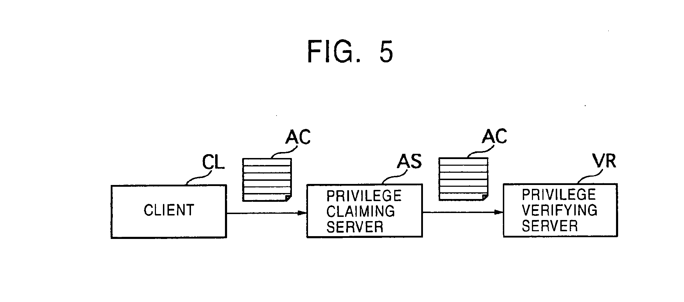

The privilege proxy function will be described by referring to Fig. 5.

As shown in the figure, a system will be examined in which, between a client CL which holds an attribute certificate AC and a privilege verifying server VR for verifying the privilege of the client CL, a privilege claiming server AS for claiming the privilege of the client Cl is disposed.

In this case, when the client CL tries to access the privilege verifying server VR, the client CL presents the attribute certificate AC to the privilege claiming server AS, and in response to this, the privilege claiming server AS presents the attribute certificate AC presented by the client CL to the privilege verifying server VR.

In this case, however, since the attribute certificate AC presented by the privilege claiming server AS is not the attribute certificate of the privilege claiming server AS, the privilege verifying server VR issues a verification result of not allowing an access. In other words, in such a system, since privilege claiming and verification are performed between units which transfer the attribute certificate directly, when the client CL tries to claim its privilege with regard to the privilege verifying server VR, the client CL needs to present the attribute certificate AC directly to the privilege verifying server VR.

Therefore, in such a system, the proxy information (Proxy Info) in the extended information (extensions) field, shown in Fig. 4, is used. As described above, the proxy information is used when a presenter of the attribute certificate is other than the owner of the attribute certificate, and indicates an entity to which the attribute certificate can be presented.

Therefore, in such a system, when the client CL tries to access the privilege verifying server VR, the client CL presents an attribute certificate AC in which proxy information indicating that the privilege verifying server VR is included as an entity to which the attribute certificate can be presented is described, to the privilege claiming server AS, and in response to this, the privilege claiming server AS presents the attribute certificate AC presented from the client CL, to the privilege verifying server VR.

With this, the privilege verifying server VR can verify the attribute certificate AC by referring to the proxy information shown in the attribute certificate AC presented from the privilege claiming server AS to issue a verification result of permitting an access.

As described above, in a system in which, between a client CL which holds an attribute certificate AC and a privilege verifying server VR for verifying the privilege of the client CL, a privilege claiming server AS for claiming the privilege of the client Cl is disposed, when the submission destination of the attribute certificate AC is described in the proxy information, the client CL can access the privilege verifying server VR.

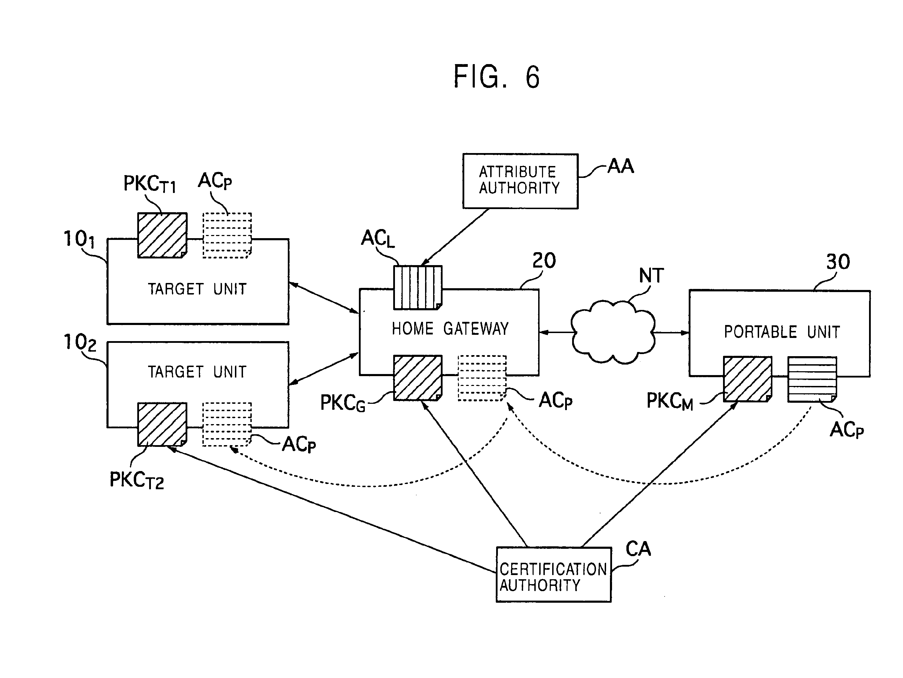

The remote access system uses such a privilege proxy function. As shown in Fig. 6, the remote access system conceptually includes, as entities, a certification authority CA which issues the above-described public-key certificate, an attribute authority AA which issues the above-described attribute certificate, target units 10₁ and 10₂ to be accessed, a home gateway 20 serving as an interface for mutually connecting a home network which the target units 10₁ and 10₂ belong to and another network, and a portable unit 30 which the user carries to access the target units 10₁ and 10₂.

The certification authority CA is an independent predetermined third party in public-key encryption methods, and issues public-key certificates, which are electronic certificates based on ISO/IEC 9594-8 or ITU-T X.509. More specifically, the certification authority CA issues public-key certificates PKC_{T1} and PKC_{T2} to the target units 10₁ and 10₂, respectively, issues a public-key certificate PKC_{G} to the home gateway 20, and issues a public-key certificate PKC_{M} to the portable unit 30. Public-key certificates can be issued in various forms, but, for example, the above public-key certificates can be embedded as data into the target units 10₁ and 10₂, the home gateway 20, and the portable unit 30 when they are manufactured.

The attribute authority AA is a local organization logically different from the certification authority CA, and issues attribute certificates, which are electronic certificates used for privilege management. The attribute authority AA authenticates the home gateway 20 by the public-key certificate PKC_{G} issued by the certification authority to the home gateway 20. The attribute authority AA issues to the home gateway 20 an attribute certificate AC_{L} for permitting the home gateway 20 to issue an attribute certificate AC_{P} to the portable unit 30, for example, when the home gateway 20 makes an initial connection from the user side. The attribute certificate AC_{L} will be described later in detail.

The target units 10₁ and 10₂ to be accessed correspond to the privilege verifying server VR shown in Fig. 5. It is assumed that the target units 10₁ and 10₂ to be accessed are, for example, various information household electric appliances, various information processing terminals such as personal computers, or servers such as home servers all of which can be connected to networks. They are units constituting a home network. Conceptually, resources described in the present invention indicate the units 10₁ and 10₂ themselves to be logged in, and also indicate data such as files and other various pieces of information held by the target units 10₁ and 10₂ to be accessed, as described in a specific application example later. For convenience of descriptions, however, it is assumed that resources indicates the target units 10₁ and 10₂ to be accessed, themselves. The target units 10₁ and 10₂ to be accessed hold the public-key certificates PKC_{T1} and PKC_{T2} issued by the certification authority, respectively, and perform mutual authentication with the home gateway 20 by using the public-key certificates PKC_{T1} and PKC_{T2}. The target units 10₁ and 10₂ receive the attribute certificate AC_{P} sent from the portable unit 30 when the portable unit 30 accesses the target units 10₁ and 10₂, through the home gateway 20, and authenticate the attribute certificate AC_{P}.

The home gateway 20 correspond to the privilege claiming server AS shown in Fig. 5. The home gateway 20 includes, for example, the concept of home routers, firewalls, and/or bridges, corresponds to a network gate which allows networks having different protocols to be connected, and functions as an interface for mutually connecting the home network to which the target units 10₁ and 10₂ belong and another network. The home gateway 20 holds the public-key certificate PKC_{G} issued by the certification authority CA, and uses the public-key certificate PKC_{G} to perform mutual authentication with the target units 10₁ and 10₂, the portable unit 30, and the attribute authority AA. When the attribute authority AA issues the attribute certificate AC_{L} for permitting to issue the attribute certificate AC_{P} to the portable unit 30, the home gateway 20 holds the attribute certificate AC_{L}, and issues the attribute certificate AC_{P} to the portable unit 30 according to the attribute certificate AC_{L}. The attribute certificate AC_{P} will be described later in detail. Further, when the home gateway 20 receives the attribute certificate AC_{P} from the portable unit 30, the home gateway 20 sends and presents the attribute certificate AC_{P} to the target units 10₁ and 10₂ to be accessed.

The portable unit 30 corresponds to the client CL shown in Fig. 5. The portable unit 30 is a portable telephone or a personal digital assistant carried by the user locating outdoors, and can be connected to the home gateway 20 through a network NT which is not secure, such as the Internet. The portable unit 30 holds the public-key certificate PKC_{M} issued by the certification authority CA, and performs mutual authentication with the home gateway 20 by using the public-key certificate PKC_{M}. When the home gateway 20 issues the attribute certificate AC_{P} for authenticating an access to the target units 10₁ and 10₂ serving as resources, the portable unit 30 holds the attribute certificate AC_{P} in a way in which the attribute certificate AC_{P} is stored in an integrated circuit (IC) card, or other ways. When the portable unit 30 tries to access each of the target units 10₁ and 10₂, the portable unit 30 performs a log-in operation by using the attribute certificate AC_{P} stored in the IC card to send and present the attribute certificate AC_{P} to the home gateway 20.

In such a remote access system, as described above, two attribute certificates AC_{L} and AC_{P} are used.

The attribute certificate AC_{L} will be described first.

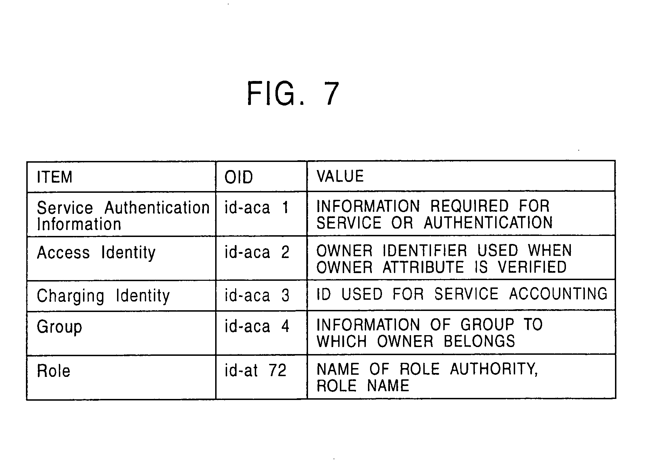

The attribute certificate AC_{L} is issued by the attribute authority AA to the home gateway 20 in order to permit the home gateway 20 to issue the attribute certificate AC_{P} to the portable unit 30, as described above. For example, in the attribute certificate AC_{L}, information indicating that permission to issue the attribute certificate AC_{P} to the portable unit 30 is given can be described by using information (Role) indicating the role assigned to the home gateway 20, serving as the owner of the attribute certificate AC_{L}, among the attribute (attributes) field shown in Fig. 4 and indicating example value excerpts and object IDs (OIDs) registered as types in Fig. 7.

The concept of a "role" will be described.

A method for managing privileges by using the concept of a "role" has been described in Japanese Patent Application No. 2002-029636, filed before by the same assignee as for the present application.

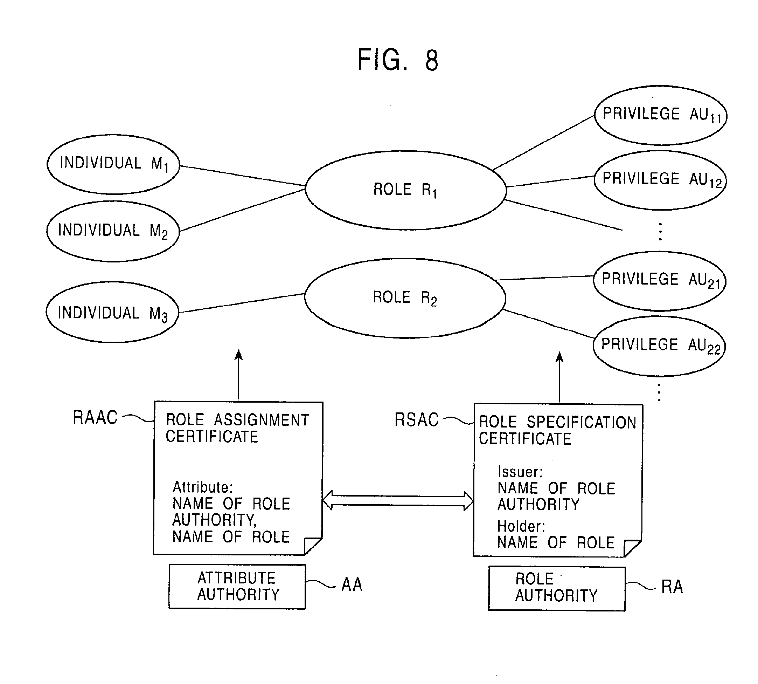

In this privilege management method, as shown in Fig. 8, conceptually, frames for defining predetermined privileges, such as AU₁₁, AU₁₂, ..., AU₂₁, AU₂₂, ..., are regarded as roles R₁ and R₂, and at least one or more persons, such as individuals M₁, M₂, and M₃, belong to these roles R₁ and R₂.

In this privilege management method, role assignment certificates RAACs which are attribute certificates owned by the individuals M₁, M₂, and M₃ and describes information indicating the roles to which the individuals M₁, M₂, and M₃ belong are issued by the attribute authority AA, and role specification certificates RSACs which are attribute certificates issued to the roles and describes information indicating privileges permitted to the roles are issued by a role authority RA. The attribute authority may also serve as the role authority. For convenience of descriptions, it is assumed that the role authority is a logically independent organization.

In this privilege management method, role specification certificates RSACs issued by the role authority RA define the roles. In other words, a permitted procedure is defined for each role in this privilege management method, and this information is described in a role specification certificate RSAC issued by the role authority RA.

The role specification certificates RSACs are generated according to the format of attribute certificates, shown in Fig. 3 and Fig. 4, and each of them includes at least information indicating the name of the role authority RA, serving as the issuer of the role specification certificate RSAC, role information such as the role name to identify the role, and information indicating a permitted operation when the system describes a code or an operation name.

In the remote access system, role specification certificates RSACs which describe various pieces of information, including information indicating that permission to issue the attribute certificate ACₚ to the portable unit 30 is given, are issued by the role authority RA, and resources for which the privileges AU₁₁, AU₁₂, ..., AU₂₁, AU₂₂, ..., are defined, that is, the target units 10₁ and 10₂ to be accessed, shown in Fig. 6, hold the role specification certificates RSACs.

In the privilege management method, a role function is assigned to each role according to a role assignment certificate RAAC issued by the attribute authority AA. In other words, in the privilege management method, each role function is defined to each of the individuals M1, M2, and M3, and this information is described in role assignment certificates RAACs issued by the attribute authority AA.

Like the role specification certificate RSAC, the role assignment certificates RAACs are also generated according to the format of attribute certificates, shown in Fig. 3 and Fig. 4, and each of them includes at least information indicating the name of the attribute authority AA, serving as the issuer of the role assignment certificate RAAC, role information such as the role name to identify the role, and information indicating the name of the role authority RA, serving as information indicating the reference point to the corresponding role specification certificate RSAC to associate with the role specification certificate RSAC.

In the remote access system, a role assignment certificate RAAC in which such various pieces of information are described is issued by the attribute authority as an attribute certificate AC_{L}. The home gateway 20, shown in Fig. 6 and corresponding to the individuals M₁, M₂, and M₃, holds the role assignment certificate RAAC.

In the remote access system, with the use of the concept of the "role", an attribute certificate AC_{L} describing information which indicates that permission to issue an attribute certificate AC_{P} to the portable unit 30 is given can be issued by the attribute authority AA to the home gateway 20. With this, in the remote access system, the home gateway 20, which holds the attribute certificate AC_{L}, can issue the attribute certificate AC_{P} to the portable unit 30.

In the remote access system, to describe information which indicates that permission to issue an attribute certificate AC_{P} to the portable unit 30 is given, in the attribute certificate AC_{L}, the authentication information (Service Authentication Information) related to service, used when the verifier of an attribute certificate authenticates the owner of the attribute certificate, and the access permission information (Access Identity) of the owner of the attribute certificate, used by the verifier of the attribute certificate, in the attribute (attributes) field shown in Fig. 7, can be used instead of the information (Role) indicating the role assigned to the home gateway 20, serving as the owner of the attribute certificate AC_{L}.

In the remote access system, a privilege transfer extension may be used to control an entity to which an attribute certificate is issued and privilege. For example, in the remote access system, a Basic Attribute Constraints extension may be used to show the home gateway 20 that an attribute certificate ACₚ can be issued to the portable unit 30, and further to specify that privilege transfer should not be permitted in the home gateway 20.

As described above, in the remote access system, various methods can be consider for giving the home gateway 20 permission to issue an attribute certificate AC_{P} to the portable unit 30.

Next, the attribute certificate AC_{P} will be described.

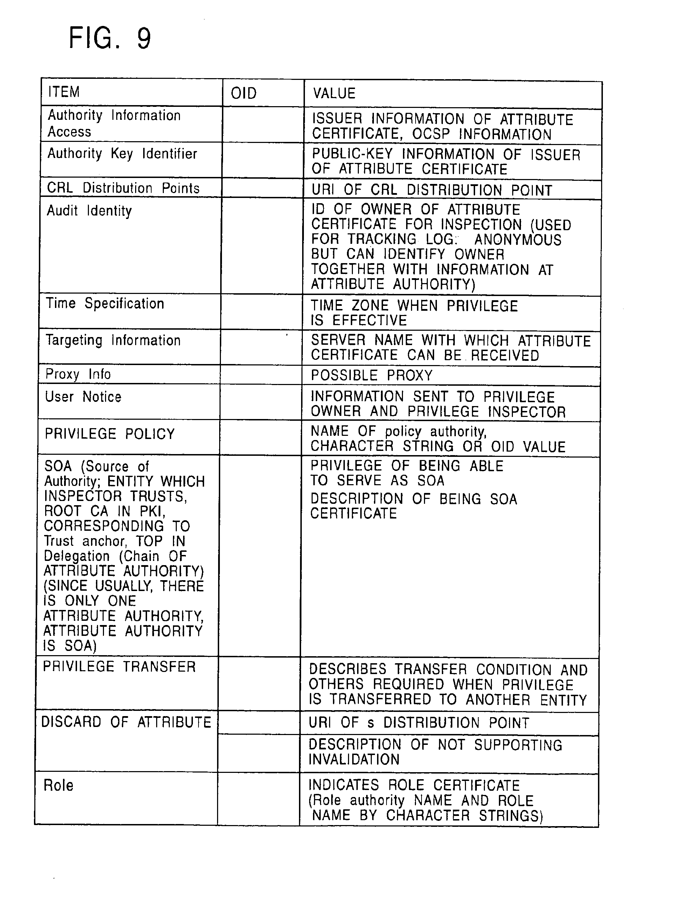

The attribute certificate AC_{P} describes privilege given to a unit or user holding a public-key certificate, and in the present embodiment, describes as privilege given to the portable unit 30 holding the public-key certificate PKC_{M}, information indicating that an access to the target units 10₁ and 10₂ serving as resources is permitted. For example, authentication information (Service Authentication Information) related to service, used when the target units 10₁ and 10₂, the verifiers of the attribute certificate AC_{P}, authenticates the owner of the attribute certificate AC_{P}, or access permission information (Access Identity) of the owner of the attribute certificate AC_{P}, used by the target units 10₁ and 10₂, the verifiers of the attribute certificate AC_{P}, specified in the attribute (attributes) field shown in Fig. 7, can be used to describe a unit to be accessed, an operation (privilege) which can be accessed, and if there exists authentication information for accessing, the authentication information in the attribute certificate AC_{P}. Proxy information (Proxy Info) specified in the extended information (extensions) shown in Fig. 4, which shows critical or example value excerpts and object IDs (OIDs) registered as types in Fig. 9, is used to describe information of the home gateway 20 through which the attribute certificate AC_{P} passes, in the attribute certificate AC_{P}.

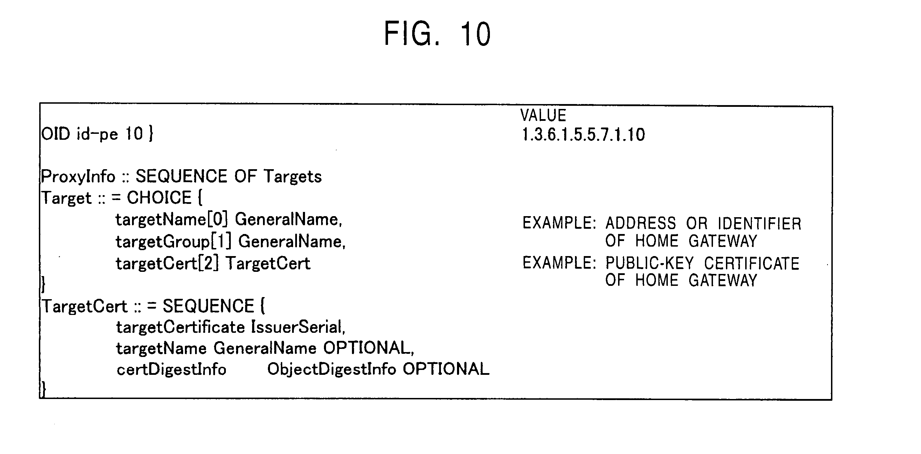

The proxy information is described specifically as shown in Fig. 10.

In the proxy information of the attribute certificate AC_{P}, the address or identifier of the home gateway 20 for identifying the home gateway 20 is described as a target (Target), and information indicating the public-key certificate PKC_{G} held by the home gateway 20 is described.

As described above, in the remote access system, the attribute certificate AC_{P} in which information indicating that an access to the target units 10₁ and 10₂ serving as resources is permitted is described as privilege given to the portable unit 30, and information of the home gateway 20 is described as proxy information can be issued from the home gateway 20 to the portable unit 30. With this, in the remote access system, when the target unit 10₁ or 10₂ receives the attribute certificate AC_{P} through the home gateway 20, it verifies the target specified in the proxy information and also verifies that the attribute certificate AC_{P} has been sent from the home gateway 20.

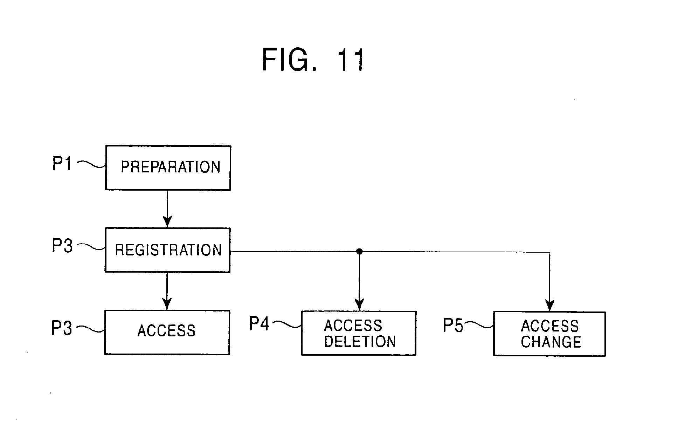

In the remote access system, when a preparation phase P1 for structuring the remote access system is performed, a registration phase P2 for registering any portable unit as a unit which accesses a resource is performed, as shown in Fig. 11. With this, the registered portable unit can perform any operation in the remote access system, and an access phase P3 is performed when the portable unit actually perform an operation. If necessary, an access deletion phase P4 for excluding any portable unit from units which access resources, and an access change phase P5 for changing the privilege given to any portable unit are performed in the remote access system.

These five phases will be described below.

First, the preparation phase P1 will be described.

In the remote access system, as the preparation phase P1 for structuring the remote access system, the certification authority CA issues a public-key certificate for authentication to each entity so that each entity can perform mutual authentication. More specifically, in the remote access system, as described above, the certification authority CA issues the public-key certificates PKC_{T1} and PKC_{T2} to the target units 10₁ and 10₂, respectively, issues the public-key certificate PKC_{G} to the home gateway 20, and issues the public-key certificate PKC_{M} to the portable unit 30 when each entity is manufactured.

Through the preparation phase P1, the remote access system has been structured such that each entity can perform mutual authentication.

Next, the registration phase P2 will be described.

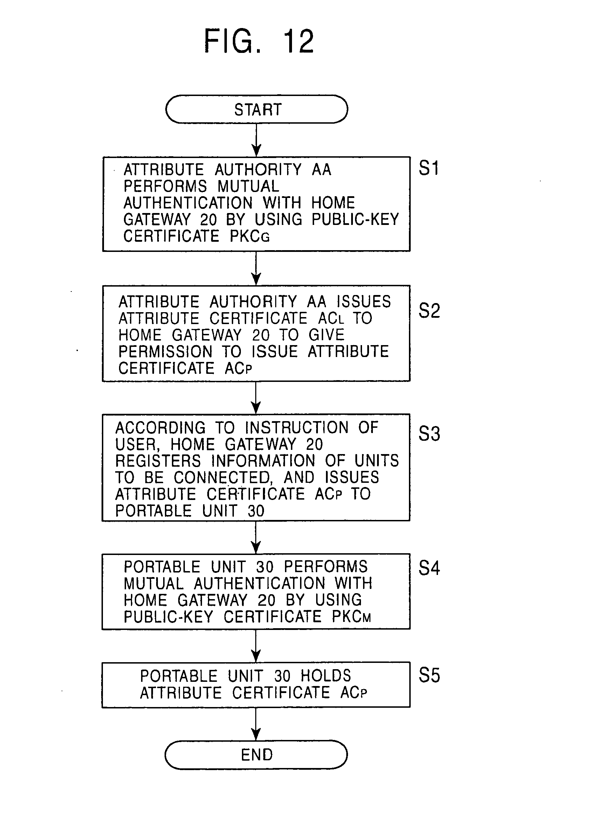

Processes shown in Fig. 12 are executed in the remote access system as the registration phase P2 for registering the portable unit 30 as a unit which accesses a resource.

As shown in the figure, in the remote access system, in step S1, the attribute authority AA performs mutual authentication with the home gateway 20 by using the public-key certificate PKC_{G} issued by the certification authority CA in the preparation phase P1 and held by the home gateway 20. This mutual authentication is for the home gateway 20 itself and determines whether the home gateway 20 is legitimate.

Then, in the remote access system, in step S2, the attribute authority AA issues to the home gateway 20 an attribute certificate AC_{L} for permitting the home gateway 20 to issue an attribute certificate AC_{P} to the portable unit 30 when the home gateway 20 makes an initial connection from the user side. With this, the home gateway 20 holds the attribute certificate AC_{L} sent from the attribute authority AA.

Then, in the remote access system, in step S3, according to the instruction of the user, the home gateway 20 registers information of units to be connected, that is, the target units 10₁ and 10₂, and issues an attribute certificate AC_{P} in which the above-described proxy information is described to the portable unit 30, which may access the target units 10₁ and 10₂ in a remote manner.

Then, in the remote access system, in step S4, the portable unit 30 uses the public-key certificate PKC_{M} issued by the certification authority CA in the above-described preparation phase P1 and held by the portable unit 30 to perform mutual authentication with the home gateway 20.

Then, in the remote access system, in step S5, the portable unit 30 stores the attribute certificate AC_{P} sent from the home gateway 20 into an IC card or others, and the registration phase P2 is terminated.

In the remote access system, through the registration phase P2 formed of such series of processes, the portable unit 30 can be registered as a unit which accesses a resource. In the remote access system in which the portable unit 30, which accesses a resource, has been registered in this way, the registered portable unit 30 can perform any operation.

The access phase P3 will be described next.

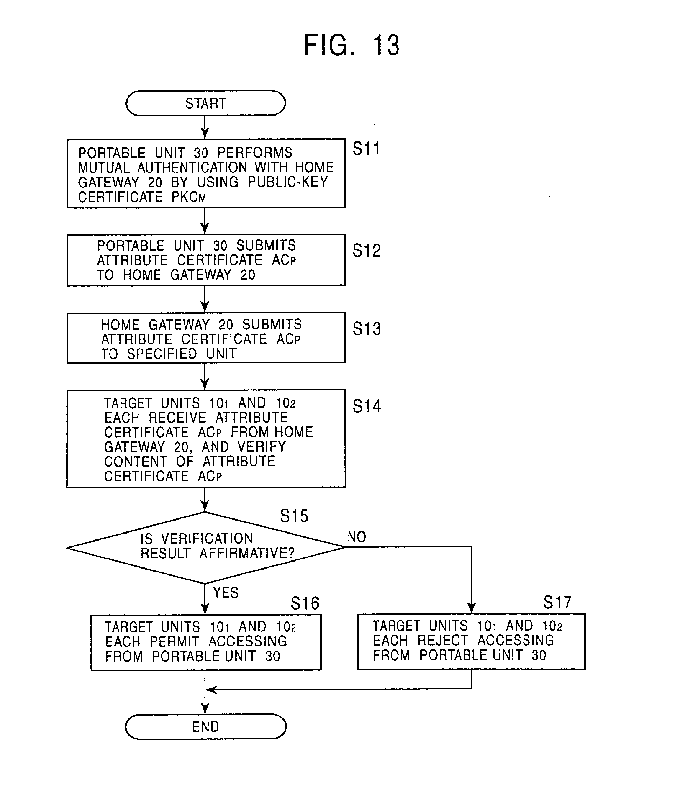

In the remote access system, when the registered portable unit 30 accesses a resource, processes shown in Fig. 13 are performed as the access phase P3.

In the remote access system, as shown in Fig. 13, first in step S11, the portable unit 30 performs mutual authentication with the home gateway 20 by using the public-key certificate PKC_{M} held by the portable unit 30.

Then, in the remote access system, in step S12, the portable unit 30 sends the attribute certificate AC_{P} held by the portable unit 30 to the home gateway 20 to present it.

In response to this operation, in the remote access system, in step S13, the home gateway 20 sends the attribute certificate AC_{P} to a unit specified as an access target, that is, one or both of the target units 10₁ and 10₂ to be accessed, to present it, according to the content of the attribute certificate AC_{P} presented by the portable unit 30.

Then, in the remote access system, in step S14, one or both of the target units 10₁ and 10₂ receive the attribute certificate AC_{P} sent from the home gateway 20, and verify the contents of the attribute certificate AC_{P}, such as the above-described proxy information and attributes.

In the remote access system, when it is determined in step S15 according to the result of verification that the attribute certificate AC_{P} is legitimate, one or both of the target units 10₁ and 10₂ permit accessing from the portable unit 30 in step S16, and the access phase P3 is terminated. On the other hand, in the remote access system, when it is determined in step S15 according to the result of verification that the attribute certificate AC_{P} is illegitimate, one or both of the target units 10₁ and 10₂ reject accessing from the portable unit 30 in step S17, and the access phase P3 is terminated.

In the remote access system, through the access phase P3 formed of such series of processes, each of the target units 10₁ and 10₂ can determine the privilege of the portable unit 30, and the portable unit 30, for which an access has been permitted, can perform any operation.

Next, the access deletion phase P4 will be described.

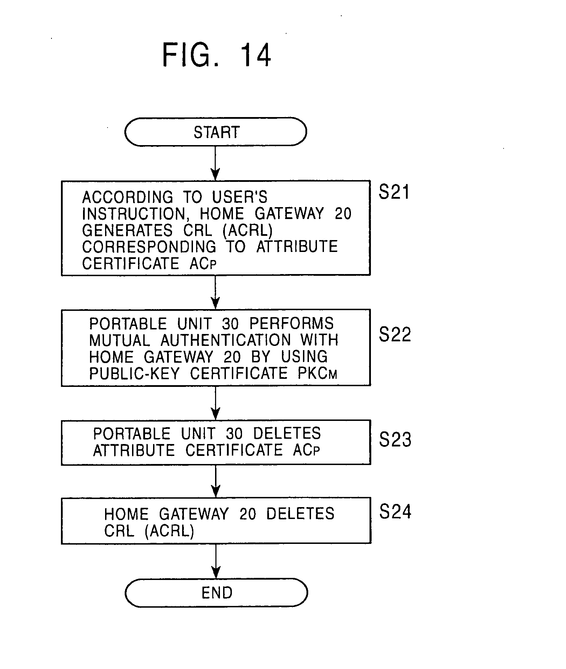

In the remote access system, to exclude any portable unit from units which access a resource, processes shown in Fig. 14 are performed as the access deletion phase P4.

In the remote access system, as shown in Fig. 14, first in step S21, according to the instruction of the user, the home gateway 20 generates a CRL (ACRL) corresponding to the attribute certificate AC_{P} issued to the portable unit 30, which may access the target units 10₁ and 10₂ to be accessed, in a remote manner, and holds the CRL (ACRL).

In this way, in the remote access system, when the CRL (ACRL) corresponding to the attribute certificate AC_{P} is generated, if the portable unit 30 accesses the home gateway 20, the home gateway 20 can reject the access and exclude the portable unit 30 from units which access the resources. Especially for some reasons at the side of the portable unit 30, such as when the portable unit 30 is used by a plurality of users or when the portable unit 30 is lost, the portable unit 30 can be excluded from units which access the resources just by generating the CRL (ACRL) corresponding to the attribute certificate AC_{P}.

In the remote access system, however, if such a operation is repeated, the size of the CRL (ACRL) becomes large and it may become inconvenient to handle the CRL.

Therefore, in the remote access system, when an authorized user wants to exclude the portable unit 30 from units which access the resources by user's intention, the processes of steps S22 to S24 may be performed after the process of step S21.

Specifically, in the remote access system, in step S22, the portable unit 30 performs mutual authentication with the home gateway 20 by using the public-key certificate PKC_{M} held by the portable unit 30.

Then, in the remote access system, in step S23, according to the instruction from the home gateway 20, the portable unit 30 deletes the attribute certificate AC_{P} held by the portable unit 30.

Then, in the remote access system, in step S24, the home gateway 20 deletes the CRL (ACRL) generated in step S21, and the access deletion phase P4 is terminated.

In the remote access system, through the access deletion phase P4 formed of such series of processes, the portable unit 30 is excluded from units which access the resources.

The access change phase P5 will be described last.

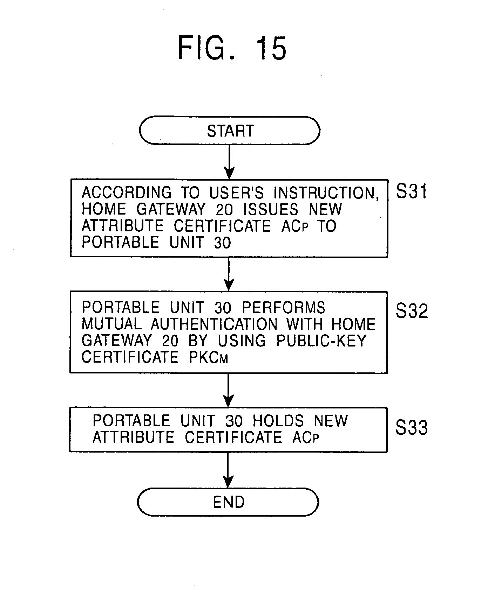

In the remote access system, to change the privilege of any portable unit, processes shown in Fig. 15 are performed as the access change phase P5.

In the remote access system, as shown in Fig. 15, first in step S31, according to the instruction of the user, the home gateway 20 issues a new attribute certificate AC_{P} in which proxy information has been described, to the portable unit 30.

Then, in the remote access system, in step S32, the portable unit 30 performs mutual authentication with the home gateway 20 by using the public-key certificate PKC_{M} held by the portable unit 30.

Then, in the remote access system, in step S33, the portable unit 30 switches the current attribute certificate AC_{P} with the new attribute certificate AC_{P} sent from the home gateway 20, and stores the new one in an IC card or others, and the access change phase P5 is terminated.

In the remote access system, through the access change phase P5 formed of such series of processes, the privilege of the portable unit 30 is changed. With this, in the remote access system, the portable unit 30 is allowed to perform any new operations.

As described above, the remote access system can use attribute certificates AC_{P} in which proxy information is described to manage privilege.

Example applications to which the above-described remote access system is applied will be described below. In the present invention, as described above, resources indicate units to be logged in themselves, and also indicate data such as files and other various pieces of information held by the units. Specific examples of the resources will be also described below.

As an example application of the remote access system, a data access system can be taken, in which remote accesses are made to data held by a home server and information processing terminals such as personal computers.

In this data access system, the data held by the home server and the information processing terminals serve as resources, and the user operates a portable unit to make a data access to the home server and the information processing terminals which hold the data.

In such a data access system, a home gateway issues an attribute certificate AC_{P} in which appropriate proxy information is described, to the portable unit, and the portable unit presents the attribute certificate AC_{P} to the home server and the information processing terminals through the home gateway when the portable unit accesses the data. With this, the portable unit can be used to access the data through the home gateway in the data access system.

In this way, the remote access system can be applied to data access systems in which remote accesses are made to data held by a home server and information processing terminals such as personal computers.

As another example application of the remote access system, an information acquisition system can be taken, in which an electric appliance camera is used to capture images.

For a specific description, an information acquisition system for acquiring, as information, things in stock in a refrigerator in a house will be examined as an example. In this information acquisition system, images of the inside of the refrigerator serve as resources, and the user uses a portable unit to view captured images to check things in stock in the refrigerator.

In such an information acquisition system, the home gateway issues an attribute certificate AC_{P} in which appropriate proxy information has been described, to the portable unit, and the portable unit presents the attribute certificate AC_{P} to the refrigerator through the home gateway when the portable unit accesses the refrigerator in which an electric appliance camera is installed in the inside. With this, even when the user is out of the house, the user can use the portable unit to operate the electric appliance camera through the home gateway to obtain images of the inside of the refrigerator in the information acquisition system.

The remote access system can be applied in this way to the information acquisition system in which images are captured by the electric appliance camera.

Further, as another example application of the remote access system, an information acquisition system can be taken, in which images are captured at any places.

For a specific description, an information acquisition system for authenticating members by acquiring the images of the member cards which prove that the members have membership will be examined as an example. In this information acquisition system, the images of the member cards placed at any places such as the houses of the members serve as resources, and the users use portable units to have the authenticator of the member cards view the images to prove that the members have membership.

In such an information acquisition system, the home gateway issues an attribute certificate AC_{P} in which appropriate proxy information has been described, to each portable unit, and the portable unit presents the attribute certificate AC_{P} to a camera which captures the image of the member card, through the home gateway when the portable unit accesses the camera. With this, even when the user does not have the member card with him/her, the user can use the portable unit to operate the camera through the home gateway to obtain the image of the member card in the information acquisition system.

The remote access system can be applied in this way to the information acquisition system in which images are captured at any places.

Furthermore, as another example application of the remote access system, an electric-appliance operation system can be taken, in which an electric appliance is remote-operated from the outdoors.

For a specific description, an electric-appliance operation system for turning on and off an air conditioning unit in a house will be examined as an example. In this an electric-appliance operation system, the air conditioning unit itself serves as a resource, and the user uses a portable unit to access the remote controller to remote-operate the air conditioning unit serving as a resource.

In such an electric-appliance operation system, the home gateway issues an attribute certificate AC_{P} in which appropriate proxy information has been described, to the portable unit, and the portable unit presents the attribute certificate AC_{P} to the remote controller through the home gateway when the portable unit accesses the remote controller. With this, even when the user is out of the house, the user can use the portable unit to operate the remote controller through the home gateway to turn on and off the air conditioning unit in the electric-appliance operation system.

The remote access system can be applied in this way to the electric-appliance operation system in which an electric appliance is remote-operated from the outdoors.

As described above, the remote access system according to an embodiment of the present invention uses attribute certificates AC_{P} in which proxy information is described, for privilege management, and can easily perform control of each privilege for each of the target units 10₁ and 10₂ to be accessed, when the portable unit 30 remote-accesses each of the target units 10₁ and 10₂.

In this remote access system, when attribute certificates AC_{P} are used, the attribute certificates AC_{P} are transferred between the portable unit 30 and the target units 10₁ and 10₂ to be accessed serving as resources, through the home gateway 20 serving as the entrance of the network to which the target units 10₁ and 10₂ belong. Since each of the transfer routes of the attribute certificates AC_{P} is determined uniquely, the transfer routes of the attribute certificates AC_{P} can be verified and enhanced security is obtained.

The present invention is not limited to the above-described embodiment. In the above-described embodiment, for example, the home gateway 20 serving as the entrance of the home network to which the target units 10₁ and 10₂ to be accessed belong issues the attribute certificates AC_{P} to the portable unit 30. In the present invention, an entity which issues the attribute certificates AC_{P} is not a main concern. The home gateway 20 needs to have at least a function for presenting attribute certificates AC_{P} to appropriate submission destination according to the contents of the attribute certificates AC_{P}.

As a specific example of the above case, a remote access system in which an attribute certificate AC_{P} issued by a home gateway serving as an entrance of a certain network is used to access a resource belonging to another network will be described below.

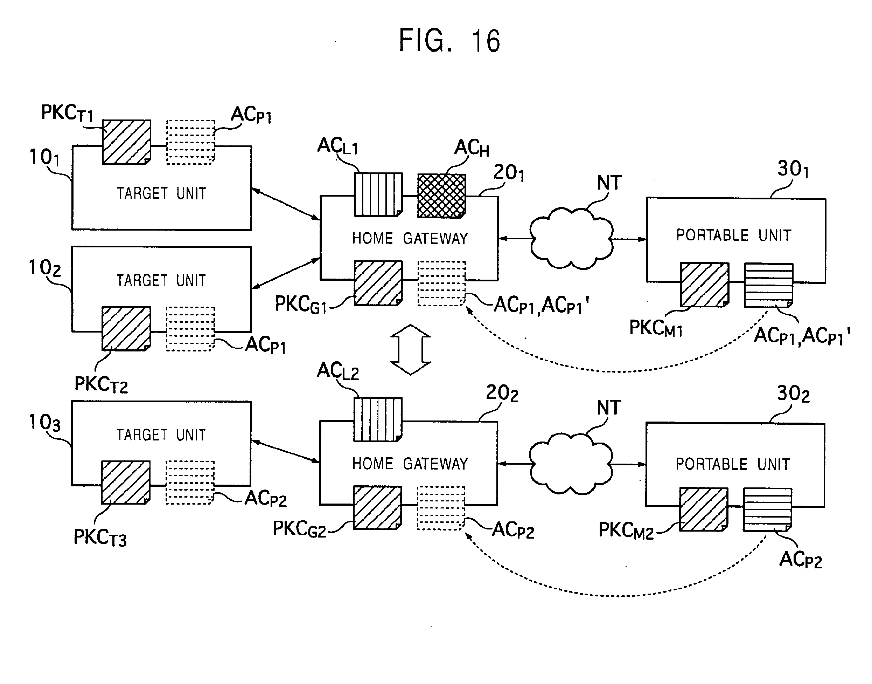

As shown in Fig. 16, the remote access system conceptually includes, as entities, target units 10₁ and 10₂ to be accessed and belonging to a first home network, a home gateway 20₁ serving as an entrance of the first home network, to which the target units 10₁ and 10₂ belong, a portable unit 30₁ which the user carries to access the target units 10₁ and 10₂, a target unit 10₃ to be accessed and belonging to a second home network which is different from the first home network, a home gateway 20₂ serving as an entrance of the second home network, to which the target unit 10₃ belongs, a portable unit 30₂ which the user carries to access the target unit 10₃, and the above-described certification authority CA and attribute authority AA although these authorities are not shown in the figure.

In other words, the remote access system has two parts, one is a system such as that shown in Fig. 6, including the first home network, and the other is a system, including the second network for another home.

The target units 10₁ and 10₂ to be accessed constitute the first home network. The target units 10₁ and 10₂ to be accessed hold public-key certificates PKC_{T1} and PKC_{T2} issued by the certification authority CA, not shown, and perform mutual authentication with the home gateway 20₁ by using the public-key certificates PKC_{T1} and PKC_{T2}, respectively. The target units 10₁ and 10₂ also receive an attribute certificate AC_{P1} sent from the portable unit 30₁ when the portable unit 30₁ accesses the target units 10₁ and 10₂, through the home gateway 20₁, and authenticate the attribute certificate AC_{P1}.

The home gateway 20₁ functions as an interface for mutually connecting the first home network to which the target units 10₁ and 10₂ belong and another network. The home gateway 20₁ holds a public-key certificate PKC_{G1} issued by the certification authority CA, not shown, and uses the public-key certificate PKC_{G1} to perform mutual authentication with the target units 10₁ and 10₂, the portable unit 30₁, and the attribute authority AA, not shown. When the attribute authority AA, not shown, issues an attribute certificate AC_{L1} for permitting to issue the attribute certificate AC_{P1} to the portable unit 30₁, the home gateway 20₁ holds the attribute certificate AC_{L1}, and issues the attribute certificate AC_{P1} to the portable unit 30₁ according to the attribute certificate AC_{L1}. Further, when the home gateway 20₁ receives the attribute certificate AC_{P1} from the portable unit 30₁, the home gateway 20₁ sends and presents the attribute certificate AC_{P1} to the target units 10₁ and 10₂ to be accessed.

Furthermore, when the attribute authority AA, not shown, issues an attribute certificate AC_{H}, described later in detail, in which information indicating a home gateway in another network which can be accessed is described, the home gateway 20₁ holds the attribute certificate AC_{H}, and is allowed according to the attribute certificate AC_{H} to communicate with the home gateway 20₂ in the second home network. The home gateway 20₁ sends and presents the attribute certificate AC_{H} to the home gateway 20₂ in the second home network to have the home gateway 20₂ issue an attribute certificate AC_{P1}' used for obtaining access permission to the target unit 10₃ to be accessed and belonging to the second home network, and sends the attribute certificate AC_{P1}' to the portable unit 30₁. When the home gateway 20₁ receives the attribute certificate AC_{P1}' from the portable unit 30₁, the home gateway 20₁ sends and presents the attribute certificate AC_{P1}' and the attribute certificate AC_{H} to the home gateway 20₂. The attribute certificate AC_{P1}' will be described later in detail.

The portable unit 30₁ usually serves as a unit to access each of the target units 10₁ and 10₂ to be accessed, belonging to the first home network, and can be connected to the home gateway 20₁ through a network NT which is not secure, such as the Internet. The portable unit 30₁ holds the public-key certificate PKC_{M1} issued by the certification authority CA, not shown, and performs mutual authentication with the home gateway 20₁ by using the public-key certificate PKC_{M1}. When the home gateway 20₁ issues the attribute certificate AC_{P1} for authenticating an access to the target units 10₁ and 10₂ serving as resources, the portable unit 30₁ holds the attribute certificate AC_{P1} in a way in which the attribute certificate AC_{P1} is stored in an IC card, or other ways. When the portable unit 30₁ tries to access each of the target units 10₁ and 10₂, the portable unit 30₁ performs a log-in operation by using the attribute certificate AC_{P1} stored in the IC card to send and present the attribute certificate AC_{P1} to the home gateway 20₁.

In addition, the portable unit 30₁ can also the target unit 10₃ belonging to the second home network. When the home gateway 20₂ issues the attribute certificate AC_{P1}' for authenticating an access to the target unit 10₃ serving as a resource, and the portable unit 30₁ receives the attribute certificate AC_{P1}' through the home gateway 20₁, the portable unit 30₁ holds the attribute certificate AC_{P1}' in a way in which the attribute certificate AC_{P1}' is stored in an IC card, or other ways. When the portable unit 30₁ tries to access the target unit 10₃, the portable unit 30₁ performs a log-in operation by using the attribute certificate AC_{P1}' stored in the IC card to send and present the attribute certificate AC_{P1}' to the home gateway 20₁.

The target unit 10₃ to be accessed constitutes the second home network. The target unit 10₃ holds a public-key certificate PKC_{T3} issued by the certification authority CA, not shown, and performs mutual authentication with the home gateway 20₂ by using the public-key certificates PKC_{T3}. The target unit 10₃ also receives an attribute certificate ACₚ₂ sent from the portable unit 30₂ when the portable unit 30₂ accesses the target unit 10₃, through the home gateway 20₂, and authenticates the attribute certificate ACₚ₂. Further, when the portable unit 30₁ determines to access the target unit 10₃, the target unit 10₃ receives the attribute certificate ACₚ₁' sent from the portable unit 30₁ when the portable unit 30₁ accesses the target unit 10₃ and the attribute certificate AC_{H} sent from the home gateway 20₁, through the home gateway 20₂, and authenticates the attribute certificate AC_{P1}' and AC_{H}.

The home gateway 20₂ functions as an interface for mutually connecting the second home network to which the target unit 10₃ belongs and another network. The home gateway 20₂ holds a public-key certificate PKC_{G2} issued by the certification authority CA, not shown, and uses the public-key certificate PKC_{G2} to perform mutual authentication with the target unit 10₃, the portable unit 30₂, and the attribute authority AA, not shown. When the attribute authority AA, not shown, issues an attribute certificate AC_{L2} for permitting to issue the attribute certificate AC_{P2} to the portable unit 30₂, the home gateway 20₂ holds the attribute certificate AC_{L2}, and issues the attribute certificate AC_{P2} to the portable unit 30₂ according to the attribute certificate AC_{L2}. Further, when the home gateway 20₂ receives the attribute certificate AC_{P2} from the portable unit 30₂, the home gateway 20₂ sends and presents the attribute certificate AC_{P2} to the target unit 10₃.

Furthermore, when home gateway 20₂ receives the attribute certificate AC_{H} from the home gateway 20₁, the home gateway 20₂ issues the attribute certificate AC_{P1}' according to the attribute certificate AC_{H}. When the home gateway 20₂ receives the attribute certificate AC_{P1}' from the portable unit 30₁ through the home gateway 20₁ and the attribute certificate AC_{H} from the home gateway 20₁, the home gateway 20₂ sends and presents the attribute certificates AC_{P1}' and AC_{H} to the target unit 10₃ to be accessed.

The portable unit 30₂ serves as a unit to access the target unit 10₃ to be accessed, belonging to the second home network, and can be connected to the home gateway 20₂ through a network NT which is not secure, such as the Internet. The portable unit 30₂ holds the public-key certificate PKC_{M2} issued by the certification authority CA, not shown, and performs mutual authentication with the home gateway 20₂ by using the public-key certificate PKC_{M2}. When the home gateway 20₂ issues the attribute certificate AC_{P2} for authenticating an access to the target unit 10₃ serving as a resource, the portable unit 30₂ holds the attribute certificate AC_{P2} in a way in which the attribute certificate AC_{P2} is stored in an IC card, or other ways. When the portable unit 30₂ tries to access the target unit 10₃, the portable unit 30₂ performs a log-in operation by using the attribute certificate AC_{P2} stored in the IC card to send and present the attribute certificate AC_{P2} to the home gateway 202.

In such a remote access system, in addition to the above-described two attribute certificates AC_{L} and AC_{P}, two attribute certificates AC_{H} and AC_{P1}' are used.

The attribute certificate AC_{H} will be described first.

As described above, the attribute certificate AC_{H} describes information indicating an accessible entity in another network, specifically, the home gateway 20₂, and is signed by the attribute authority AA, not shown, and issued to the home gateway 20₁. For example, access permission information (Access Identity) specified in the attribute (attributes) field described above is used to describe information indicating the home gateway 20₂ serving as an accessible entity in another network.

In the remote access system, the home gateway 20₂ can issue the attribute certificate AC_{H} in which information indicating the home gateway 20₂ serving as an accessible entity in another network is described, in response to the request of the home gateway 20₁. With this, the portable unit 30₁ can access the target unit 10₃ through the home gateway 20₁ which holds the attribute certificate AC_{H} in the remote access system.

The attribute certificate AC_{P1}' will be described next.

Like the above-described attribute certificate AC_{P}, the attribute certificate AC_{P1}' describes privilege given to a unit or user holding a public-key certificate, and in the present embodiment, describes as privilege given to the portable unit 30₁ holding the public-key certificate PKC_{M1}, information indicating that an access to the target unit 10₃ serving as a resource belonging to the second home network is permitted. For example, in the same way as in the above-described attribute certificate AC_{P} for attributes (attributes), authentication information (Service Authentication Information) or access permission information (Access Identity) is used to describe a unit to be accessed, an operation (privilege) which can be accessed, and if there exists authentication information for accessing, the authentication information, in the attribute certificate AC_{P1}' . Proxy information (Proxy Info) is used to describe information of the addresses or identifiers for identifying the two home gateways 20₁ and 20₂ through which the attribute certificate AC_{P1}' passes.

As described above, in the remote access system, the attribute certificate AC_{P1}' in which information indicating that an access to the target unit 10₃ serving as a resource belonging to the second home network is permitted is described as privilege given to the portable unit 30₁, and information of the two home gateways 20₁ and 20₂ is described as proxy information can be issued from the home gateway 20₂ to the portable unit 30₁ through the home gateway 20₁. With this, in the remote access system, when the target unit 10₃ receives the attribute certificate AC_{P1}' through the home gateway 20₂, it verifies the target specified in the proxy information and also verifies that the attribute certificate AC_{P1}' has been sent through the two home gateways 20₁ and 20₂.

In the remote access system, as shown in Fig. 11 before, a preparation phase P1, a registration phase P2, an access phase P3, an access deletion phase P4, and an access change phase P5 are performed in the remote access system. It is assumed below that the portable unit 30₁ accesses the target unit 10₃ belonging to the second home network.

First, the preparation phase P1 will be described.

In the remote access system, as the preparation phase P1 for structuring the remote access system, the certification authority CA issues a public-key certificate for authentication to each entity so that each entity can perform mutual authentication. More specifically, in the remote access system, as described above, the certification authority CA issues the public-key certificates PKC_{T1}, PKC_{T2}, and PKC_{T3} to the target units 10₁, 10₂, and 10₃, respectively, issues the public-key certificate PKC_{G1} and PKC_{G2} to the home gateways 20₁ and 20₂, respectively, and issues the public-key certificate PKC_{M1} and PKC_{M2} to the portable units 30₁ and 30₂, respectively, when each entity is manufactured.

Through the preparation phase P1, the remote access system has been structured such that each entity can perform mutual authentication.

Next, the registration phase P2 will be described.

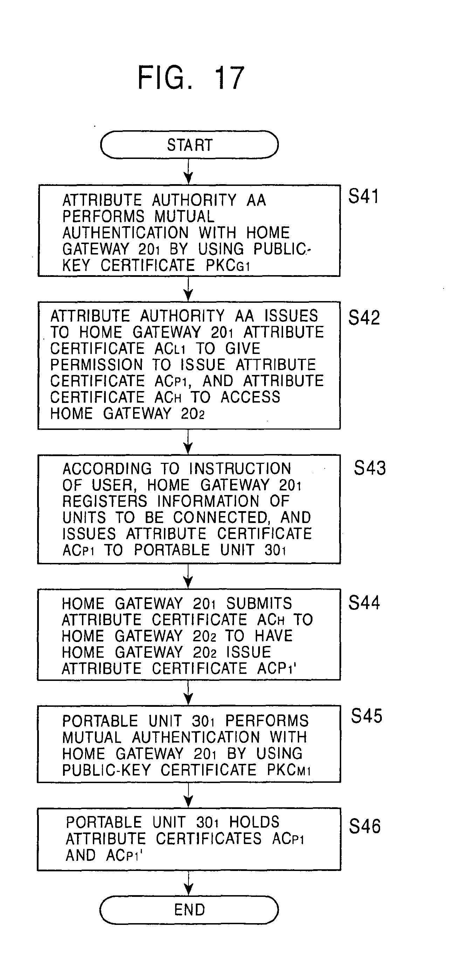

Processes shown in Fig. 17 are executed in the remote access system as the registration phase P2 for registering the portable unit 30 as a unit which accesses a resource.

As shown in the figure, in the remote access system, in step S41, the attribute authority AA performs mutual authentication with the home gateway 20₁ by using the public-key certificate PKC_{G1} issued by the certification authority CA in the preparation phase P1 and held by the home gateway 20₁. This mutual authentication is for the home gateway 20₁ itself and determines whether the home gateway 20₁ is legitimate.

Then, in the remote access system, in step S42, the attribute authority AA issues to the home gateway 20₁ an attribute certificate AC_{L1} for permitting the home gateway 20₁ to issue an attribute certificate AC_{P1} to the portable unit 30₁ when the home gateway 20₁ makes an initial connection from the user side. In the remote access system, when the home gateway 20₁ accesses another home gateway 20₂, the attribute certificate AA issues to the home gateway 20₁ an attribute certificate AC_{H} in which information indicating that an access to the home gateway 20₂ is allowed is described. With these operations, the home gateway 20₁ holds the two attribute certificates AC_{L1} and AC_{H} sent from the attribute authority AA.

Then, in the remote access system, in step S43, according to the instruction of the user, the home gateway 20₁ registers information of units to be connected, that is, the target units 10₁ and 10₂, and issues an attribute certificate AC_{P1} in which the above-described proxy information is described to the portable unit 30₁, which may access the target units 10₁ and 10₂ in a remote manner.

Then, in the remote access system, when the portable unit 30₁ is to access the target unit 10₃ through the another home gateway 20₂, the home gateway 20₁ sends and presents the attribute certificate AC_{H} to the another home gateway 20₂ to have the another home gateway 20₂ issue an attribute certificate AC_{P1}' in which the above-described proxy information is described, in step S44. With this, the home gateway 20₂ issues the attribute certificate AC_{P1}', and sends the attribute certificate AC_{P1}' to the home gateway 20₁.

Then, in the remote access system, in step S45, the portable unit 30₁ uses the public-key certificate PKC_{M1} issued by the certification authority CA in the above-described preparation phase P1 and held by the portable unit 30₁ to perform mutual authentication with the home gateway 20₁.

Then, in the remote access system, in step S46, the portable unit 30₁ stores the attribute certificates AC_{P1} and AC_{P1}' sent from the home gateway 20₁ into an IC card or others, and the registration phase P2 is terminated.

In the remote access system, through the registration phase P2 formed of such series of processes, the portable unit 30₁ can be registered as a unit which accesses a resource. In the remote access system in which the portable unit 30₁, which accesses a resource, has been registered in this way, the registered portable unit 30₁ can perform any operation.

The access phase P3 will be described next.

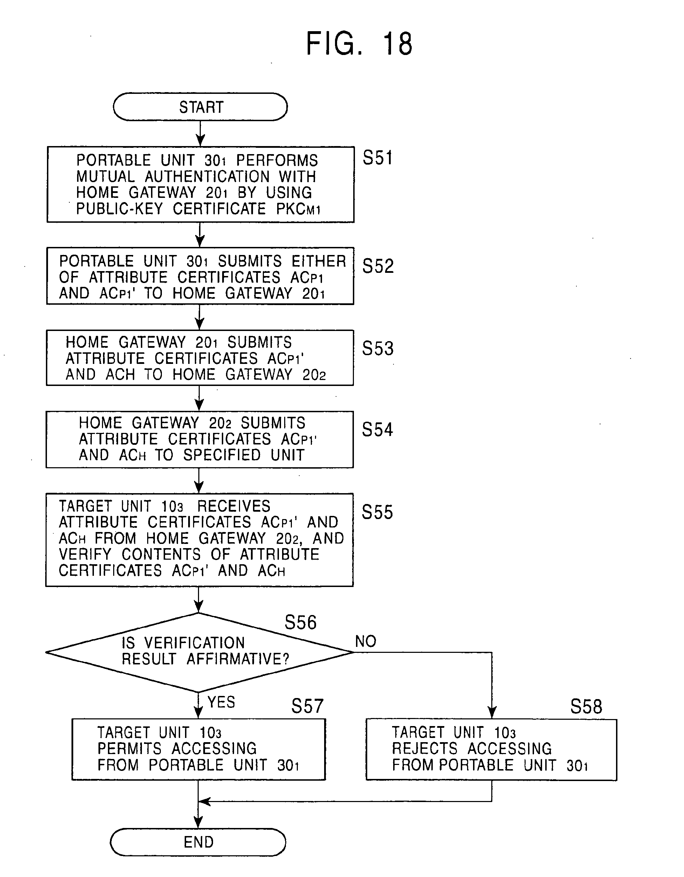

In the remote access system, when the registered portable unit 30₁ accesses a resource, processes shown in Fig. 18 are performed as the access phase P3.

In the remote access system, as shown in Fig. 18, first in step S51, the portable unit 30₁ performs mutual authentication with the home gateway 20₁ by using the public-key certificate PKC_{M1} held by the portable unit 30₁.

Then, in the remote access system, in step S52, the portable unit 30₁ sends and presents either of the attribute certificates AC_{P1} and AC_{P1}' held by the portable unit 30₁ to the home gateway 20₁. More specifically, in the remote access system, when an access is made to either or both of the target units 10₁ and 10₂, the portable unit 30₁ sends and presents the attribute certificate AC_{P1} to the home gateway 20₁. When an access is made to the target unit 10₃, the portable unit 30₁ sends and presents the attribute certificate AC_{P1}' to the home gateway 20₁.

In the remote access system, when the portable unit 30₁ sends and presents the attribute certificate AC_{P1} to the home gateway 20₁, the same processes as those of step S13 to step S17 shown in Fig. 13 are performed. It is assumed here that the portable unit 30₁ sends and presents the attribute certificate AC_{P1}' to the home gateway 20₁.

In the remote access system, in step S53, the home gateway 20₁ verifies the proxy information included in the attribute certificate ACₚ₁' presented by the portable unit 30₁. When the home gateway 20₁ understands that a unit to be accessed is the target unit 10₃ belonging to the second home network, which is different from the first home network under the control of the home gateway 20₁, the home gateway 20₁ sends and presents the two attribute certificates ACₚ₁' and AC_{H} to the home gateway 20₂, which controls the second home network.

Then, in the remote access system, in step S54, the home gateway 20₂ sends and presents the two attribute certificates AC_{P1}' and AC_{H} presented from the home gateway 20₁, to a unit specified as an access target, that is, the target unit 10₃ to be accessed, according to the contents of the attribute certificates AC_{P1}' and AC_{H}.

Then, in the remote access system, in step S55, the target unit 10₃ receives the two attribute certificates AC_{P1}' and AC_{H} sent from the home gateway 20₂, and verifies the contents of the attribute certificates AC_{P1}' and AC_{H}, such as the above-described proxy information and attributes.

In the remote access system, when it is determined in step S56 according to the result of verification that the attribute certificates AC_{P1}' and AC_{H} are legitimate, the target unit 10₃ permits accessing from the portable unit 30₁ in step S57, and the access phase P3 is terminated. On the other hand, in the remote access system, when it is determined in step S56 according to the result of verification that the attribute certificate AC_{P1}' or AC_{H} is illegitimate, the target unit 10₃ rejects accessing from the portable unit 30₁ in step S58, and the access phase P3 is terminated.

In the remote access system, through the access phase P3 formed of such series of processes, the target unit 10₃ can determine the privilege of the portable unit 30₁, and the portable unit 30₁, for which an access has been permitted, can perform any operation.

Next, the access deletion phase P4 will be described.

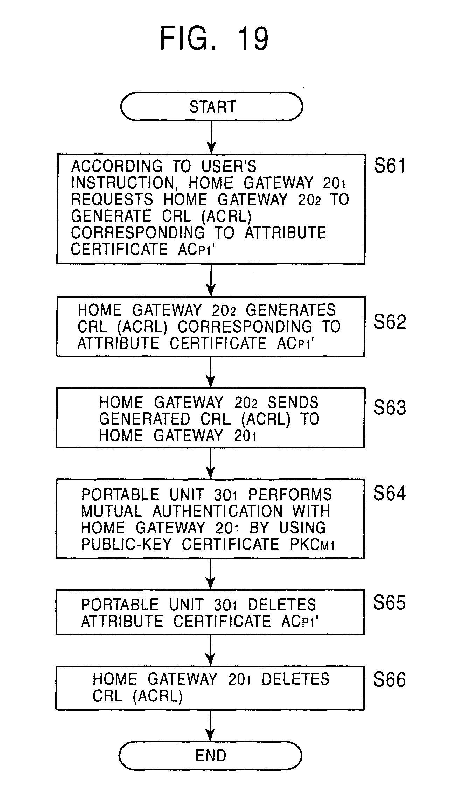

In the remote access system, to exclude any portable unit from units which access a resource, processes shown in Fig. 19 are performed as the access deletion phase P4. In the remote access system, when the portable unit 30₁ accesses the target units 10₁ and 10₂, the same processes as those shown in Fig. 14 need to be performed. It is assumed here that the portable unit 30₁ accesses the target unit 10₃, and the portable unit 30₁ is excluded from units which access the target unit 10₃.

In the remote access system, as shown in Fig. 19, first in step S61, according to the instruction of the user, the home gateway 20₁ requests the home gateway 20₂ to generate a CRL (ACRL) corresponding to the attribute certificate AC_{P1}' issued to the portable unit 30₁, which may access the target unit 10₃ to be accessed, in a remote manner.

Then, in the remote access system, in step S62, the home gateway 20₂ generates a CRL (ACRL) corresponding to the attribute certificate AC_{P1}' in response to the request sent from the home gateway 20₁.

Then, in the remote access system, in step S63, the home gateway 20₂ sends and distributes the generated CRL (ACRL) corresponding to the attribute certificate AC_{P1}' to the home gateway 20₁. With this, the home gateway 20₁ holds the CRL (ACRL) corresponding to the attribute certificate AC_{P1}', sent from the home gateway 20₂.

In this way, in the remote access system, when the CRL (ACRL) corresponding to the attribute certificate AC_{P} is generated, if the portable unit 30₁ accesses the target unit 10₃ through the home gateway 20₁, the home gateway 20₁ can reject the access and exclude the portable unit 30₁ from units which access the resource.

In the remote access system, when an authorized user wants to exclude the portable unit 30₁ from units which access the resources by user's intention, the same processes as those of steps S22 to S24 shown in Fig. 14 may be performed after the process of step S63.

Specifically, in the remote access system, in step S64, the portable unit 30₁ performs mutual authentication with the home gateway 20₁ by using the public-key certificate PKC_{M1} held by the portable unit 30₁.

Then, in the remote access system, in step S65, according to the instruction from the home gateway 20₁, the portable unit 30₁ deletes the attribute certificate AC_{P1}' held by the portable unit 30₁.

Then, in the remote access system, in step S66, the home gateway 20₁ deletes the CRL (ACRL) held in step S63, and the access deletion phase P4 is terminated.

In the remote access system, through the access deletion phase P4 formed of such series of processes, the portable unit 30₁ is excluded from units which access the target unit 10₃ serving as a resource.

In the remote access system, when the target unit 10₃ wants to exclude the portable unit 30₁ from units which access the target unit 10₃, for its circumstances, it is necessary to skip the process of step S61 and to perform the processes of step S62 and subsequent steps according to the instruction of the user.

The access change phase P5 will be described last.

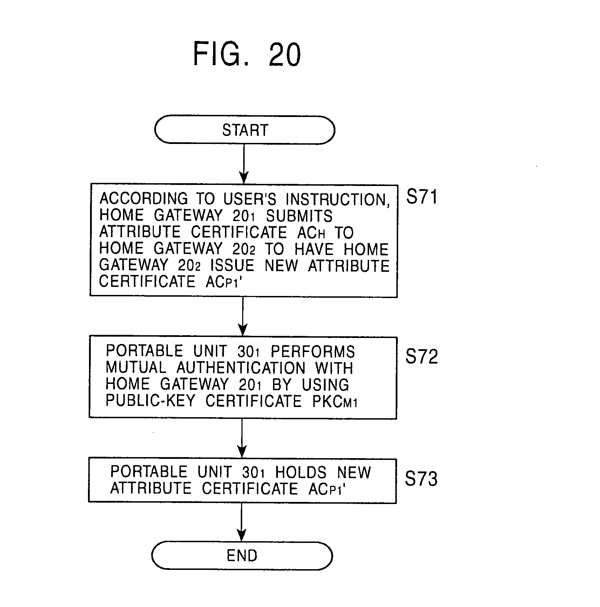

In the remote access system, to change the privilege of any portable unit, processes shown in Fig. 20 are performed as the access change phase P5. In the remote access system, to change the privilege of the portable unit 30₁ for resources in the first home network, the same processes as those shown in Fig. 15 need to be performed. It is assumed here that the privilege of the portable unit 30₁ for resources in the second home network is to be changed.

In the remote access system, as shown in Fig. 20, first in step S71, according to the instruction of the user, the home gateway 20₁ sends and presents the attribute certificate AC_{H} to the another home gateway 20₂ and has the home gateway 20₂ issue a new attribute certificate AC_{P1}' in which proxy information has been described. With this, the home gateway 20₂ issues a new attribute certificate AC_{P1}' and sends the attribute certificate AC_{P1}' to the home gateway 20₁.

Then, in the remote access system, in step S72, the portable unit 30₁ performs mutual authentication with the home gateway 20₁ by using the public-key certificate PKC_{M1} held by the portable unit 30₁.

Then, in the remote access system, in step S73, the portable unit 30₁ switches the current attribute certificate AC_{P1}' with the new attribute certificate AC_{P1}' sent from the home gateway 20₁, and stores the new one in an IC card or others, and the access change phase P5 is terminated.

In the remote access system, through the access change phase P5 formed of such series of processes, the privilege of the portable unit 30₁ is changed. With this, in the remote access system, the portable unit 30₁ is allowed to perform any new operations.

As described above, the remote access system can use attribute certificates AC_{P1}' in which proxy information is described to manage privilege for resources in the second home network, which usually cannot be accessed from the portable unit 30₁.

As described above, in the present invention, a home gateway serving as an entrance of a network which a portable unit can usually access does not issue an attribute certificate AC_{P} to the portable unit, but any entity such as a home gateway serving as an entrance of another network may issue the attribute certificate AC_{P}. The home gateway needs to be able to verify the content of the attribute certificate AC_{P}.

In the above-described embodiments, accesses are made to resources in home networks. The present invention can be applied to any networks.

Further, in the above-described embodiments, portable units are used as units which access resources. In the present invention, not only portable units but also any units can serve as such.

Furthermore, in the present invention, the operation of each entity can be implemented not only by hardware but also by software. When software is used in the present invention, the central processing unit (CPU) provided for each entity, for example, can execute a remote-access program for performing the above-described remote access to implement each function. The remote-access program can be provided, for example, by predetermined recording media such as compact discs or transfer media such as the Internet.

The present invention can be appropriately modified within its scope.

## Claims

1. A remote access system for accessing a predetermined resource from a remote place, comprising:
an access target unit to be accessed;
an accessing unit for accessing the access target unit; and
a connection unit for standing proxy for the access target unit to the accessing unit,
wherein the accessing unit comprises:
storage means for storing a certificate in which access privilege with regard to the resource is described; and
presenting means for presenting the certificate stored in the storage means to the access target unit having the resource,
the connection unit comprises:
verification means for verifying the certificate received from the accessing unit; and
transmission means for transmitting the certificate verified by the verification means to the access target unit specified by the accessing unit, and
the access target unit comprises determination means for determining according to the certificate transmitted by the connection unit whether to permit the accessing unit to make an access to the resource.

2. A remote access system according to Claim 1, wherein the connection unit connects a network which includes the access target unit and another network to each other.

3. A remote access system according to Claim 1, wherein the certificate includes proxy information which indicates that the connection unit stands proxy for the access target unit.

4. A remote access system according to Claim 1,
further comprising an authority for issuing an issue permission certificate serving as a certificate for giving permission to issue to the accessing unit, the certificate in which access privilege with regard to the resource is described,
wherein the connection unit issues the issue permission certificate issued by the authority, to the accessing unit.

5. A remote access system according to Claim 4, wherein the certificate in which access privilege with regard to the resource is described includes information indicating that permission to issue to the accessing unit the certificate in which access privilege with regard to the resource is described is given, as role information indicating a role assigned to the connection unit.

6. A remote access system according to Claim 1, further comprising a certificate authority for issuing a public-key certificate based on a public-key cryptosystem, to each entity constituting the remote access system.

7. A remote access method for accessing a predetermined resource from a remote place, comprising:
a storage step of storing a certificate in which access privilege with regard to the resource is described;
a presenting step of presenting the certificate stored in the storage step to an access target unit having the resource;
a verification step of verifying the certificate received from an accessing unit for accessing the access target unit;
a transmission step of transmitting the certificate verified in the verification step to the access target unit specified by the accessing unit; and
a determination step of determining whether to permit the accessing unit to make an access to the resource, according to the certificate transmitted by a connection unit for standing proxy for the access target unit to the accessing unit.

8. A remote access method according to Claim 7, wherein a network which includes the access target unit and another network are connected to each other.

9. A remote access method according to Claim 7, wherein the certificate includes proxy information which indicates that the connection unit stands proxy for the access target unit.

10. A remote access method according to Claim 7, further comprising a step of issuing an issue permission certificate serving as a certificate for giving permission to issue to the accessing unit, the certificate in which access privilege with regard to the resource is described,
wherein the issue permission certificate issued by the authority is issued to the accessing unit.

11. A remote access method according to Claim 10, wherein the certificate in which access privilege with regard to the resource is described includes information indicating that permission to issue to the accessing unit the certificate in which access privilege with regard to the resource is described is given, as role information indicating a role assigned to the connection unit.

12. A remote access method according to Claim 7, further comprising a step of issuing a public-key certificate based on a public-key cryptosystem, to each entity constituting the remote access method.

13. A remote access program executable by a computer, for accessing a predetermined resource from a remote place, the program comprising:
a storage step of storing a certificate in which access privilege with regard to the resource is described;
a presenting step of presenting the certificate stored in the storage step to an access target unit having the resource;
a verification step of verifying the certificate received from an accessing unit for accessing the access target unit;
a transmission step of transmitting the certificate verified in the verification step to the access target unit specified by the accessing unit; and
a determination step of determining whether to permit the accessing unit to make an access to the resource, according to the certificate transmitted by a connection unit for standing proxy for the access target unit to the accessing unit.
